# EUROPEAN PATENT SPECIFICATION

(11) **EP 3 378 693 B1**
(45) Date of publication and mention of the grant of the patent: **26.06.2019**
(21) Application number: 18163787.7
(22) Date of filing: 23.03.2018
(51) Int. Cl.: B60K 37/06, H01H 5/30, H01H 3/60

(54) **PUSH-BUTTON SWITCH FOR VEHICLE DASHBOARDS**
DRUCKKNOPFSCHALTER FÜR FAHRZEUGINSTRUMENTENTAFELN
BOUTON POUSSOIR POUR TABLEAUX DE BORD DE VEHICULES

(30) Priority: 24.03.2017 IT 201700032916
(43) Date of publication of application: 26.09.2018
(73) Proprietor: VIMERCATI S.p.A., 20016 Pero (Milano) (IT)
(72) Inventor: BOANO, Marco, 20024 Garbagnate Milanese (IT)
(74) Representative: Bernotti, Andrea

(56) References cited:
- EP-A2- 0 104 956
- FR-A1- 2 669 767
- US-A- 5 889 507

## Description

### PRIORITY CLAIM

*This application claims priority from Italian Patent Application no.* 102017000032916 filed on 24/03/2017*.*

The present invention relates to a push-button switch, in particular for vehicle dashboards. However, it is clear that the application of the invention is not limited to the automotive field alone, to which reference will be made hereinafter for convenience.

As already known, modern automotive industry, and especially its branch relating to mid and top range vehicles, increasingly feels the need to provide the user with control devices (switches, selectors and the like) giving a perception of high quality even from the sensorial point of view. In fact, the passenger compartment of a vehicle usually contains control devices directly used by the driver or by the passengers to perform various functions, which may include, just to mention a few examples, operating headlights and flashers, turning on and off courtesy lights, controlling communication and entertainment or air conditioning devices and setting navigation systems. The search for quality in the sensations perceived by the users of such control devices is a factor that drives and determines the development of components in the automotive field to a non-negligible extent.

A parameter that is particularly relevant to the users is the stroke of the push-button switches. In fact, a short stroke, together with a well-calibrated operating force threshold and the absence of noise, is perceived as an indicator of the quality of the product, because it facilitates and makes pleasant the operation of the control devices.

On the other hand, the reduction of the stroke must be balanced by the necessity of ensuring the correct operation of the devices, thus avoiding a failure of the change of state (open/closed) in response to the user's actions. Furthermore, it is necessary to take into account the tolerance chains determined by the geometry and by the structure, which does not allow reducing the stroke beyond a certain extent (in general, the minimum stroke is at least 0.6-1 mm) in known devices.

EP0104956A2 discloses a push-button switch comprising:
a substrate, on which an electric circuit is provided;
a cursor movable along an actuation direction with a stroke between a rest position and a pressed position;
a pad made of an elastic polymeric material and applied to the substrate;
a pre-loading device configured to provide a pre-loading force to the cursor along the actuation direction toward the rest position; a dome-shaped switch member, directly arranged on the substrate in a seat between the pad and the substrate;
wherein the cursor has a base coupled to the pre-loading device and is provided with an actuator member configured to actuate the switch member, the actuator member being aligned to the switch member.

The object of the present invention is therefore to provide a push-button switch, which allows overcoming or at least attenuating the described limitations.

According to the present invention, there is provided a push-button switch comprising:
a substrate, on which an electric circuit is provided;
a cursor, movable along an actuation direction with a stroke between a rest position and a pressed position;
a pad, made of elastic polymeric material applied to the substrate;
a pre-loading device, configured to provide a pre-loading force to the cursor along the actuation direction toward the rest position;
a dome-shaped metal switch member, directly arranged on the substrate in a seat between the pad and the substrate;
wherein the cursor has a base coupled to the pre-loading device and is provided with an actuator member extending from the base parallel to the actuation direction and configured to actuate the switch member, the actuator member being aligned to the switch member and misaligned with respect to the pre-loading device.

The misalignment of the actuator member and of the pre-loading device allows excluding this latter from the tolerance chain, thus reducing its weight. The minimum stroke must take into account the sum of all process tolerances related to the elements that determine movement and stop of the cursor. The possible limitation of tolerances by excluding elements from the chain allows pushing the reduction of the stroke beyond the usual limits. Thanks to the proposed solution, it is possible to obtain strokes of 0.4 mm.

According to an aspect of the invention, the actuator member of the cursor is directly in contact with the switch member.

In this way, the tolerance chain may be minimized, obtaining very short strokes.

According to an aspect of the invention, the pad has a window around the switch member and a free end of the actuator member is inside the window at least in a section of the stroke.

The switch thus manufactured has a compact structure and an advantageously simple production.

According to an aspect of the invention, the pad comprises: a damping member between the actuator member and the switch member; and
a damping support portion around the damping member;
and wherein the damping member is connected to the damping support portion by a connection membrane and is movable along the actuation direction.

The described general solution does not compromise the acoustic performance of the push-button switch according to the invention. The introduction of the damping member, however, allows a further attenuation of the sound caused by the click of the switch member. It is therefore possible to satisfy extremely strict acoustic sensorial requirements, while maintaining the stroke of the push-button switch within advantageous limits. Furthermore, the damping member can be easily integrated into the pad as a portion of the pad, connected to the rest of the pad by means of the connecting membrane.

According to an aspect of the invention, a free end of the actuator member is in contact with the damping member of the pad at least in a section of the stroke.

According to a further aspect of the invention, the damping member of the pad is directly in contact with the switch member at least in a section of the stroke.

The actuator member meets the damping member, which in turn meets the switch member. The absence of further interposed elements helps reducing the tolerance chain and, consequently, limiting the cursor stroke.

According to an aspect of the invention, the actuator member and the pre-loading device are opposite and symmetrically arranged with respect to a cursor axis.

The symmetrical arrangement of the actuator member and of the pre-loading device allows a satisfactory balancing of the thrusts on the base of the cursor, thus preventing the user from perceiving any instability when actuating the push-button switch.

According to an aspect of the invention, the switch member and the pre-loading device are non-overlapping along the actuation direction.

The separation, namely the projections of the switch member and of the pre-loading device on the substrate plane are different and separate. The separation facilitates the making of the push-button switch without interfering with the stroke.

According to an aspect of the invention, the pre-loading device is integrated into the pad and comprises a press member and a pre-loading membrane connecting the press member to a pre-loading support section of the pad and in which the pre-loading membrane defines a contrast spring configured to provide a pre-loading force in response to deformations in the actuation direction.

The integration of the pre-loading device into the pad is advantageous both in terms of cost reduction and in terms of constructive simplicity. In fact, the materials with which the pads are commonly made are suitable to manufacture elastic membranes providing easily controllable strength and direction. Therefore, the pre-loading device does not require any additional component.

According to an aspect of the invention, a casing houses the cursor and stop members shaped to limit the stroke of the cursor to the rest position, and the pre-loading device maintains the cursor in the rest position in the absence of any external pressure on the cursor.

The pre-loading ensures that the cursor remains firmly in the rest position in the absence of pressure, thus avoiding annoying sensations of tactile instability.

According to an aspect of the invention, the electric circuit comprises a first terminal and a second terminal and the switch member has a peripheral portion in contact with the first terminal of the electric circuit and has an open configuration, in which a central portion of the switch member is separated from the second terminal, and a closed configuration, in which the central portion of the switch member is in contact with the second terminal. According to an aspect of the invention, the switch member has a snap force threshold between the open configuration and the closed configuration.

According to an aspect of the invention, the switch member defines a normally open switch.

The switch member is defined by a so-called "metal dome", which is characterized by a snap threshold. When the dome is subjected to a force greater than the snap force threshold, the dome suddenly gives way to the closed configuration, closing the circuit until the pressure on the cursor is released. The control of the snap force threshold can be very precisely defined during the design and manufacture steps of the switch member.

The present invention will now be described with reference to the attached drawings showing some non-limiting embodiments thereof, in which:
- Figure 1 is a front view, sectioned along an axial longitudinal plane, of a push-button switch according to an embodiment of the present invention;
- Figure 2 is an enlarged view of a detail of the push-button switch of Figure 1;
- Figure 3 is an exploded perspective view of components of the push-button switch of Figure 1, with parts removed for clarity's sake;
- Figure 4 is a sectional view taken along the plane IV-IV of Figure 3 and further enlarged with a component of the push-button switch of Figure 1 in a first operating configuration;
- Figure 5 shows the component of Figure 4 in a second operating configuration;
   Figure 6 is a front view, sectioned along an axial longitudinal plane, of a push-button switch according to a different embodiment of the present invention;
- Figure 7 is an enlarged view of a detail of the push-button switch of Figure 6.

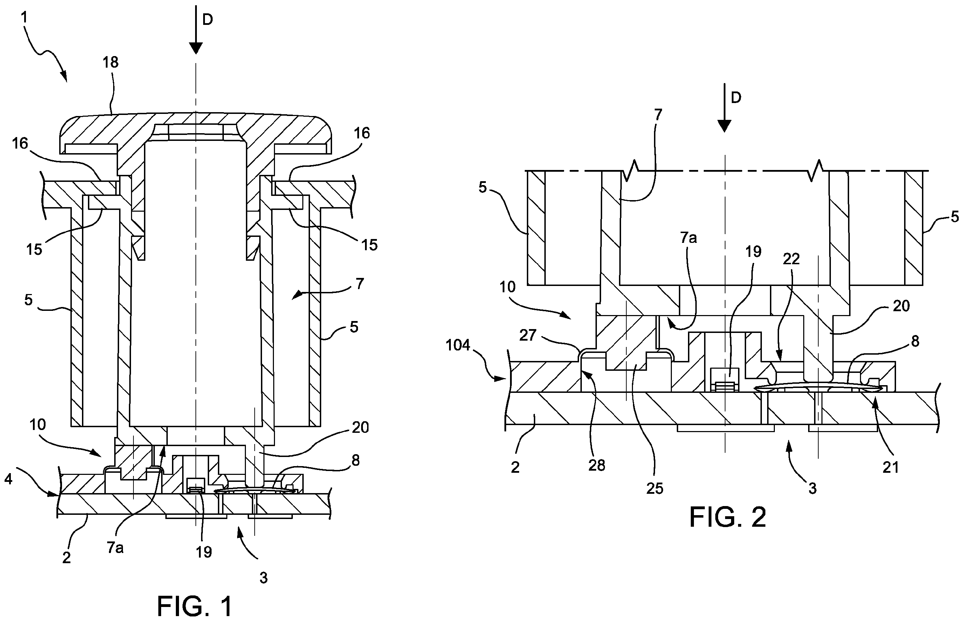

With reference to Figures 1 and 2, a push-button switch for vehicle dashboards made according to an embodiment of the present invention is indicated as a whole with the number 1 and comprises a substrate 2, on which a printed circuit 3 is provided, a pad 4, a casing 5, a cursor 7, a metal switch member 8 and a pre-loading device 10.

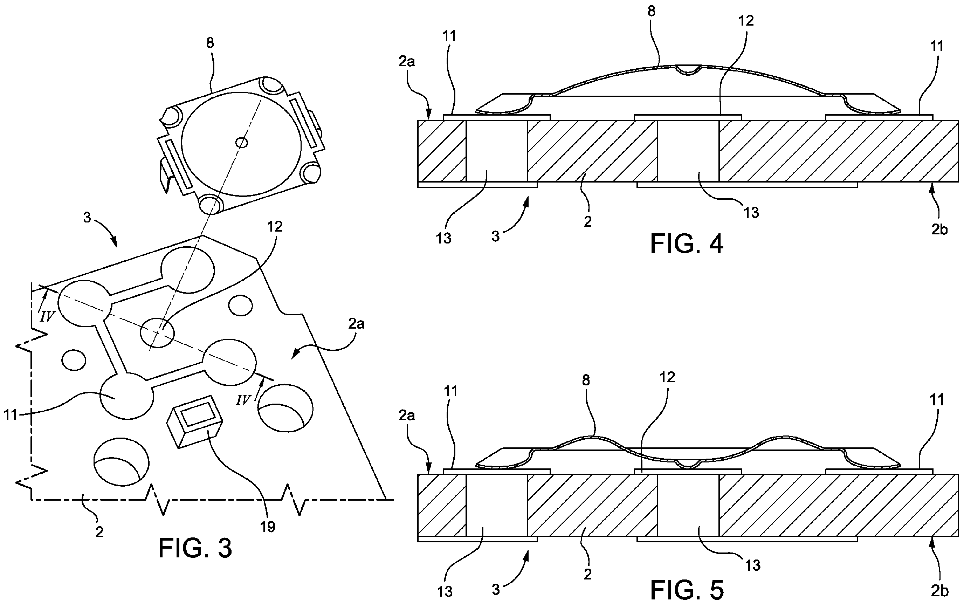

The substrate 2 is a printed circuit board and the printed circuit 3 can be made on one or both sides of the substrate 2. In the example described (see also the details of Figures 3-5), the printed circuit 3 has a first switch terminal 11 and a second switch terminal 12 on a first side or inner side 2a of the substrate 2 and partially extends on a second side or outer side 2b of the substrate 2. The connection between the switch terminals 11, 12 and the remaining part of the printed circuit 3 is made by through passages 13.

With reference again to Figures 1 and 2, the pad 4 is made of an elastic polymeric material, e.g. silicone rubber, and is applied to the inner face 2a of the substrate 2, e.g. by means of an adhesive layer not shown.

The casing 5 is coupled to the substrate 2 and houses the cursor 7. More in detail, the casing 5 defines a sliding seat for the cursor 7, which is movable along an actuation direction D substantially perpendicular to the substrate 2 with a stroke between a rest position and a pressed position. A flange 15 and an annular abutment 16 define stop members, which limit the stroke of the cursor 7 to the rest position.

The cursor 7, having a substantially cylindrical shape, is provided with an aesthetic covering button 18 at one end facing outwards and has a base 7a at an opposite end facing the substrate 2. The cursor 7 can be hollow for allowing the backlighting of the aesthetic covering button 18 by means of a LED 19 arranged on the substrate 2. The cursor 7 is provided with an actuator member 20, which extends from the base 7a parallel to the actuation direction D and is configured to actuate the switch member 8 as described below.

The switch member 8 is directly housed on the substrate 2 in a seat 21 between the pad 4 and the substrate 2. The switch member 8 is further defined by a metal dome, which can reversibly collapse with a snap action when a force greater than a snap force threshold is applied to the switch member 8. When the force is removed, the switch member 8 returns to the initial rest configuration. The switch member 8 has a peripheral portion along the base of the dome in contact with the first terminal 11 of the printed circuit 3. In an open configuration, a central portion of the switch member 8 is separated from the second terminal 12 of the printed circuit 3. In a closed configuration due to the collapse of the metal dome caused by exceeding the snap force threshold, the central portion of the switch member 8 is in contact with the second terminal 12. The switch member therefore defines a normally open switch.

The actuator member 20 of the cursor 7 is aligned to the switch member 8. In one embodiment, in particular, the actuator member 20 is directly in contact with the dome of the switch member 8 at least in a section of the stroke. In detail, the pad 4 has a window 22 around the switch member 8 and a free end of the actuator member 20 is located inside the window 22. When the cursor 7 is pressed, the actuator member 20 meets the switch member 8 and, as a result of further pressure, deforms the dome of the switch member 8, thus causing a transition from the open configuration to the closed configuration. When the cursor 7 is released, the switch member 8 returns to the open configuration.

The pre-loading device 10 is configured to provide a pre-loading force to the cursor 7 along the actuation direction D toward the rest position. A portion of the base 7a of the cursor 7 is coupled (in contact, in the example described) to the pre-loading device 10, which is misaligned with respect to the actuator member 20. In one embodiment, the actuator member 20 and the pre-loading device 10 are opposite and symmetrically arranged with respect to an axis of the cursor 7. Moreover, the switch member 8 and the pre-loading device 10 are non-overlapping along the actuation direction D.

In one embodiment, the pre-loading device 10 is integrated into the pad 4 and comprises a press member 25 and a pre-loading membrane 27 connecting the press member 25 to a pre-loading support portion 28 of the pad 4. The pre-loading membrane 27 defines a contrast spring configured to provide a pre-loading force in response to deformations in the actuation direction D. In the rest position, the distance between the base 7a of the cursor 7 and the pad is such that the pre-loading membrane is deformed and therefore the pre-loading device 10 maintains the cursor in the rest position in the absence of any external pressure on the cursor 7.

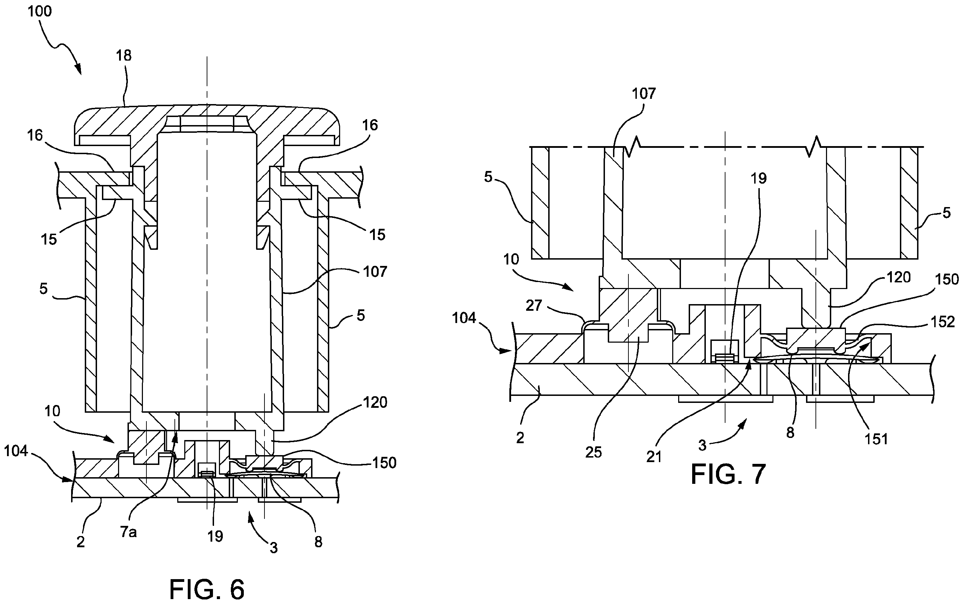

Figures 6 and 7 show an embodiment of the invention in which parts identical to the ones already described are indicated by the same reference numbers. In this case, a push-button switch 100 is different from the push-button switch 1 already described in that a damping member 150 made of elastic polymeric material is interposed between the actuator member of the cursor, here respectively indicated with 120 and 107, and the switch member 8. The damping member 150 is integrated into the pad, here indicated with 104. In detail, the damping member 150 is defined by a portion of the pad 104, movable in the actuation direction and connected to a damping support portion 151 of the pad 104 around the damping member. The connection of the damping member 150 to the damping support portion 151 is achieved by a connection membrane 152, which allows the damping member to move along the actuation direction D without any appreciable resistance within the stroke of the cursor 107.

A free end of the actuator member 120 is in contact with the damping member 150 of the pad 104 at least in a section of the stroke of the cursor 107. Furthermore, the damping member 150 is directly in contact with the switch member 8, at least in a section of the stroke of the cursor 107, so as to cause the transition of the switch member 8 from the open configuration to the closed configuration when a sufficient pressure is exerted on the cursor 107.

## Claims

1. A push-button switch comprising:
a substrate (2), on which an electric circuit (3) is provided;
a cursor (7; 107) movable along an actuation direction (D) with a stroke between a rest position and a pressed position;
a pad (4; 104) made of an elastic polymeric material and applied to the substrate (2);
a pre-loading device (10) configured to provide a pre-loading force to the cursor (7; 107) along the actuation direction (D) toward the rest position;
a dome-shaped metal switch member (8), directly arranged on the substrate (2) in a seat (21) between the pad (4; 104) and the substrate (2);
wherein the cursor (7; 107) has a base (7a) coupled to the pre-loading device (10) and is provided with an actuator member (20; 120) extending from the base (7a) parallel to the actuation direction (D) and configured to actuate the switch member (8), the actuator member (20; 120) being aligned to the switch member (8) and misaligned with respect to the pre-loading device (10).

2. The switch according to claim 1, wherein, at least in a first section of the stroke, the actuator member (20) of the cursor (7) is directly in contact with the switch member (8).

3. The switch according to claim 2, wherein the pad (4) has a window (22) around the switch member (8) and a free end of the actuator member (20) is inside the window (22) at least in a second section of the stroke.

4. The switch according to claim 1, wherein the pad (104) comprises a damping member (150) between the actuator member (120) and the switch member (8) and a damping support portion (151) around the damping member (150) and wherein the damping member (150) is connected to the damping support portion (151) by a connection membrane (152) and is movable along the actuation direction (D).

5. The switch according to claim 4, wherein a free end of the actuator member (120) is in contact with the damping member (150) of the pad (104) at least in a first section of the stroke.

6. The switch according to claim 5, wherein the damping member (150) of the pad (104) is directly in contact with the switch member (8) at least in a second section of the stroke.

7. The switch according to any one of the foregoing claims, wherein the actuator member (20; 120) and the pre-loading device (10) are opposite and symmetrically arranged with respect to an axis of the cursor (7; 107).

8. The switch according to any one of the foregoing claims, wherein the switch member (8) and the pre-loading device (10) are non-overlapping along the actuation direction (D).

9. The switch according to any one of the foregoing claims, wherein the pre-loading device (10) is integrated in the pad (4; 104) and comprises a press member (25) and a pre-loading membrane (27) connecting the press member to a pre-loading support portion (28) of the pad (4; 104) and wherein the pre-loading membrane (27) defines a contrast spring configured to provide a pre-loading force in response to deformations in the actuation direction (D).

10. The switch according to any one of the foregoing claims, comprising a casing (5) housing the cursor (7; 107) and stop members (15, 16) configured to limit the stroke of the cursor (7; 107) to the rest position, wherein the pre-loading device (10) maintains the cursor (7; 107) in the rest position in the absence of any external pressure on the cursor (7; 107).

11. The switch according to any one of the foregoing claims, wherein the electric circuit (3) comprises a first terminal (11) and a second terminal (12) and wherein the switch member (8) has a peripheral portion in contact with the first terminal (11) of the electric circuit (3) and has an open configuration, in which a central portion of the switch member (8) is separated from the second terminal (12), and a closed configuration, in which the central portion of the switch member (8) is in contact with the second terminal (12).

12. The switch according to claim 11, wherein the switch member (8) has a snap force threshold between the open configuration and the closed configuration.

13. The switch according to claim 11 or 12, wherein the switch member (8) defines a normally open switch.

## Patentansprüche

1. Ein Druckschalter, umfassend:
ein Substrat (2), auf dem eine elektrische Schaltung (3) vorgesehen ist;
einen Cursor (7; 107), der entlang einer Betätigungsrichtung (D) mit einem Hub zwischen einer Ruheposition und einer gedrückten Position bewegbar ist;
eine Unterlage (4; 104) aus einem elastischen Polymermaterial, die auf das Substrat (2) aufgebracht ist;
eine Vorladeeinrichtung (10), die so konfiguriert ist, dass sie dem Cursor (7; 107) entlang der Betätigungsrichtung (D) eine Vorspannkraft in Richtung der Ruheposition zuführt;
ein kuppelförmiges Metallschaltglied (8), das direkt auf dem Substrat (2) in einem Sitz (21) zwischen der Unterlage (4; 104) und dem Substrat (2) angeordnet ist;
wobei der Cursor (7; 107) eine Basis (7a) aufweist, die mit der Vorladeeinrichtung (10) gekoppelt ist und mit einem Betätigungselement (20; 120) versehen ist, das sich von der Basis (7a) parallel zur Betätigungsrichtung (D) erstreckt und konfiguriert ist, um das Schaltglied (8) zu betätigen, wobei das Betätigungselement (20; 120) zu dem Schaltglied (8) ausgerichtet ist und in Bezug auf die Vorladeeinrichtung (10) versetzt ausgerichtet ist.

2. Schalter nach Anspruch 1, wobei zumindest in einem ersten Abschnitt des Hubs das Betätigungselement (20) des Cursors (7) direkt mit dem Schaltglied (8) in Kontakt steht.

3. Schalter nach Anspruch 2, wobei die Unterlage (4) ein Fenster (22) um das Schaltglied (8) herum aufweist, und ein freies Ende des Betätigungselements (20) ist zumindest in einem zweiten Abschnitt des Hubs innerhalb des Fensters (22) angeordnet.

4. Schalter nach Anspruch 1, wobei die Unterlage (104) ein Dämpfungselement (150) zwischen dem Betätigungselement (120), dem Schaltglied (8) und einen Dämpfungsstützabschnitt (151) um das Dämpfungselement (150) aufweist, und wobei das Dämpfungselement (150) durch eine Verbindungsmembran (152) mit dem Dämpfungsstützabschnitt (151) verbunden ist und entlang der Betätigungsrichtung (D) bewegbar ist.

5. Schalter nach Anspruch 4, wobei ein freies Ende des Betätigungselements (120) zumindest in einem ersten Abschnitt des Hubs mit dem Dämpfungselement (150) der Unterlage (104) in Kontakt steht.

6. Schalter nach Anspruch 5, wobei das Dämpfungselement (150) der Unterlage (104) zumindest in einem zweiten Abschnitt des Hubs direkt mit dem Schaltglied (8) in Kontakt steht.

7. Schalter nach einem der vorhergehenden Ansprüche, bei dem das Betätigungselement (20; 120) und die Vorladeeinrichtung (10) gegenüber einer Achse des Cursors (7; 107) entgegengesetzt und symmetrisch angeordnet sind.

8. Schalter nach einem der vorhergehenden Ansprüche, bei dem das Schaltglied (8) und die Vorladeeinrichtung (10) sich entlang der Betätigungsrichtung (D) nicht überlappen.

9. Schalter nach einem der vorangehenden Ansprüche, wobei die Vorladeeinrichtung (10) in die Unterlage (4; 104) integriert ist, ein Drückelement (25) und mit einer das Drückelement verbindende Vorlademembran (27) umfasst, die mit einem Vorlastungsstützabschnitt (28) der Unterlage (4; 104) verbunden ist, und wobei die Vorlademembran (27) eine Kontrastfeder definiert, die so konfiguriert ist, dass sie als Reaktion auf Verformungen in der Betätigungsrichtung (D) eine Vorbelastungskraft bereitstellt.

10. Schalter nach einem der vorhergehenden Ansprüche, umfassend ein Gehäuse (5), das den Cursor (7; 107) und Anschlagelemente (15, 16) umfasst, die so konfiguriert sind, dass sie den Hub des Cursors (7; 107) auf die Ruheposition begrenzen, wobei die Vorladeeinrichtung (10) den Cursor (7; 107) in der Ruheposition hält, wenn kein äußerer Druck auf den Cursor (7; 107) vorhanden ist.

11. Schalter nach einem der vorhergehenden Ansprüche, wobei die elektrische Schaltung (3) einen ersten Anschluss (11) und einen zweiten Anschluss (12) umfasst und wobei das Schaltglied (8) einen peripheren Abschnitt aufweist, der mit dem ersten Anschluss (11) der elektrischen Schaltung (3) in Kontakt steht und eine offene Konfiguration aufweist, in der ein zentraler Abschnitt des Schaltglieds (8) vom zweiten Anschluss (12) getrennt ist, und eine geschlossene Konfiguration aufweist, in der der zentrale Abschnitt des Schaltglieds (8) mit dem zweiten Anschluss (12) in Kontakt steht.

12. Schalter nach Anspruch 11, wobei das Schaltglied (8) eine Einrastkraftschwelle zwischen der offenen Konfiguration und der geschlossenen Konfiguration aufweist.

13. Schalter nach Anspruch 11 oder 12, wobei das Schaltglied (8) einen normalerweise offenen Schalter definiert.

## Revendications

1. Commutateur à bouton poussoir comprenant :
un substrat (2), sur lequel est prévu un circuit électrique (3) ;
un curseur (7 ; 107) mobile le long d'une direction d'actionnement (D) avec une course entre une position de repos et une position pressée ;
un tampon (4 ; 104) réalisé en un matériau polymérique élastique et appliqué sur le substrat (2) ;
un dispositif de précharge (10) configuré pour fournir une force de précharge au curseur (7 ; 107) le long de la direction d'actionnement (D) vers la position de repos ;
un élément de commutateur métallique en forme de dôme (8) agencé directement sur le substrat (2) dans un siège (21) entre le tampon (4 ; 104) et le substrat (2) ;
dans lequel le curseur (7 ; 107) a une base (7a) couplée au dispositif de précharge (10) et est pourvu d'un élément d'actionneur (20 ; 120) s'étendant depuis la base (7a) parallèlement à la direction d'actionnement (D) et configuré pour actionner l'élément de commutateur (8), l'élément d'actionneur (20 ; 120) étant aligné avec l'élément de commutateur (8) et non aligné par rapport au dispositif de précharge (10).

2. Commutateur selon la revendication 1, dans lequel, au moins dans une première section de la course, l'élément d'actionneur (20) du curseur (7) vient directement au contact de l'élément de commutateur (8).

3. Commutateur selon la revendication 2, dans lequel le tampon (4) présente une fenêtre (22) autour de l'élément de commutateur (8) et une extrémité libre de l'élément d'actionneur (20) se trouve à l'intérieur de la fenêtre (22) au moins dans une seconde section de la course.

4. Commutateur selon la revendication 1, dans lequel le tampon (104) comprend un élément d'amortissement (150) entre l'élément d'actionneur (120) et l'élément de commutateur (8) et une partie de support d'amortissement (151) autour de l'élément d'amortissement (150) et dans lequel l'élément d'amortissement (150) est relié à la partie de support d'amortissement (151) par une membrane de connexion (152) et est mobile le long de la direction d'actionnement (D).

5. Commutateur selon la revendication 4, dans lequel une extrémité libre de l'élément d'actionneur (120) vient au contact de l'élément d'amortissement (150) du tampon (104) au moins dans une première section de la course.

6. Commutateur selon la revendication 5, dans lequel l'élément d'amortissement (150) du tampon (104) vient directement au contact de l'élément de commutateur (8) au moins dans une seconde section de la course.

7. Commutateur selon l'une quelconque des revendications précédentes, dans lequel l'élément d'actionneur (20 ; 120) et le dispositif de précharge (10) sont opposés et agencés symétriquement par rapport à un axe du curseur (7 ; 107).

8. Commutateur selon l'une quelconque des revendications précédentes, dans lequel l'élément de commutateur (8) et le dispositif de précharge (10) ne se chevauchent pas le long de la direction d'actionnement (D).

9. Commutateur selon l'une quelconque des revendications précédentes, dans lequel le dispositif de précharge (10) est intégré dans le tampon (4 ; 104) et comprend un élément de pression (25) et une membrane de précharge (27) reliant l'élément de pression à une partie de support de précharge (28) du tampon (4 ; 104) et dans lequel la membrane de précharge (27) définit un ressort de contraste configuré pour fournir une force de précharge en réponse à des déformations dans la direction d'actionnement (D).

10. Commutateur selon l'une quelconque des revendications précédentes, comprenant un boîtier (5) logeant le curseur (7 ; 107) et des éléments d'arrêt (15, 16) configurés pour limiter la course du curseur (7 ; 107) à la position de repos, dans lequel le dispositif de précharge (10) maintient le curseur (7 ; 107) dans la position de repos en l'absence de toute pression extérieure sur le curseur (7 ; 107).

11. Commutateur selon l'une quelconque des revendications précédentes, dans lequel le circuit électrique (3) comprend une première borne (11) et une seconde borne (12) et dans lequel l'élément de commutateur (8) a une partie périphérique venant au contact de la première borne (11) du circuit électrique (3) et a une configuration ouverte, dans laquelle une partie centrale de l'élément de commutateur (8) est séparée de la seconde borne (12), et une configuration fermée, dans laquelle la partie centrale de l'élément de commutateur (8) vient au contact de la seconde borne (12).

12. Commutateur selon la revendication 11, dans lequel l'élément de commutateur (8) présente un seuil de force de pression entre la configuration ouverte et la configuration fermée.

13. Commutateur selon la revendication 11 ou 12, dans lequel l'élément de commutateur (8) définit un commutateur normalement ouvert.
